# EUROPÄISCHE PATENTSCHRIFT

(11) **EP 2 265 453 B1**
(45) Veröffentlichungstag und Bekanntmachung des Hinweises auf die Patenterteilung: **24.08.2011**
(21) Anmeldenummer: 09733539.2
(22) Anmeldetag: 24.02.2009
(51) Int. Cl.: B60H 1/00

(54) **KÜHLANORDNUNG UND VERFAHREN ZUM KÜHLEN EINES TEMPERATUREMPFINDLICHEN AGGREGATS EINES KRAFTFAHRZEUGS**
COOLING ARRANGEMENT AND METHOD FOR COOLING A TEMPERATURE-SENSITIVE ASSEMBLY OF A MOTOR VEHICLE
ENSEMBLE DE REFROIDISSEMENT ET PROCÉDÉ DE REFROIDISSEMENT D'UN GROUPE SENSIBLE À LA TEMPÉRATURE SUR UN VÉHICULE AUTOMOBILE

(30) Priorität: 19.04.2008 DE 102008019816; 29.07.2008 DE 102008035216
(43) Veröffentlichungstag der Anmeldung: 29.12.2010
(73) Patentinhaber: Daimler AG, 70327 Stuttgart (DE)
(72) Erfinder: EICHBERGER, Bernd, 75365 Calw (DE); HARM, Klaus, 70597 Stuttgart (DE)
(74) Vertreter: JENSEN & SON
(86) Internationale Anmeldenummer: PCT/EP2009/001286
(87) Internationale Veröffentlichungsnummer: WO 2009/127292

(56) Entgegenhaltungen:
- WO-A-03/059664
- WO-A-2008/025915
- WO-A-2008/026386
- DE-A1- 10 128 164
- US-A1- 2005 056 035

## Beschreibung

Die Erfindung betrifft eine Kühlanordnung zum Kühlen eines temperaturempfindlichen Aggregats, insbesondere eines Elektroaggregats, eines Kraftfahrzeugs, mit einem Kondensator zum Verflüssigen zumindest eines Teilvolumens eines Kältemittels in einem Kältekreislauf und mit einem stromabwärts des Kondensators angeordneten Verdampfer, welcher mit dem Kältemittel beaufschlagbar ist, und welchem Wärme des temperaturempfindlichen Aggregats, insbesondere des Elektroaggregats, zuführbar ist.

Als temperaturempfindliche Aggregate des Kraftfahrzeugs sind vorliegend Aggregate zu verstehen, welche beim Betreiben des Kraftfahrzeugs eine Erwärmung erfahren können, wobei die Erwärmung eine Funktionsfähigkeit des Aggregats zumindest vorübergehend beeinträchtigen kann. Hierbei kann die Erwärmung eine Folge des Betreibens des Aggregats selbst und/oder eine Folge eines externen Wärmeeintrags, etwa eines Eintrags von Abwärme eines Antriebsaggregats oder von Sonneneinstrahlung, sein.

Insbesondere in Hybridfahrzeugen und/oder Elektrofahrzeugen erzeugen Elektroaggregate wie Fahrbatterien, insbesondere Lithium-lonen-Batterien, Brennstoffzellen und dergleichen Wärme, wobei eine Menge an von dem Elektroaggregat erzeugter Wärme vom Lastzustand des Elektroaggregats abhängt. Lithium-lonen-Batterien sollten jedoch in einem Temperaturbereich von 20° C bis 30° C betrieben werden, um zu vermeiden, dass sich ihre Lebensdauer stark verkürzt.

Zum Kühlen des Elektroaggregats, insbesondere der Lithium-lonen-Batterie, kann an der Batterie ein Verdampfer einer zum Kühlen eines Fahrgastraums des Kraftfahrzeugs ausgelegten Kälteanlage angeordnet sein. Durch Beaufschlagen des Verdampfers mit einem in einem Kältekreislauf der Kälteanlage zirkulierenden Kältemittel und durch Zufuhren von Wärme des Elektroaggregats zu dem Verdampfer ist das Elektroaggregat kühlbar. Die Kälteanlage zum Kühlen des Fahrgastraums des Kraftfahrzeugs weist hierbei in üblicher Weise einen Verdichter zum Verdichten des gasförmigen Kältemittels, einen Kondensator zum Verflüssigen zumindest eines Teilvolumens des verdichteten Kältemittels sowie ein dem Verdampfer vorgeschaltetes Expansionsorgan zum Entspannen des verdichteten Kältemittels auf.

Als im Hinblick auf einen Energiebedarf der Kälteanlage ungünstig ist hierbei der Umstand anzusehen, dass auch bei kühlen Umgebungsbedingungen, bei welchen ein Kühlen des Fahrgastraums des Kraftfahrzeugs mittels der Kälteanlage nicht notwendig ist, der Verdichter der Kälteanlage betrieben werden muss, wenn von dem Elektroaggregat Wärme abgeführt und dem Verdampfer zugeführt werden soll.

Die US 2005056035 A1 offenbart eine Kühlanordnung zum Kühlen eines temperaturempfindlichen Elektroaggregats eines Kraftfahrzeugs mit einem Kondensator zum Verflüssigen eines Teilvolumens eines Kältemittels in einem Kältekreislauf. Die Kühlanordnung weist einen stromabwärts des Kondensators angeordneten Verdampfer, welcher mit dem Kältemittel beaufschlagbar ist und welchem Wärme des temperaturempfindlichen Elektroaggregats zuführbar ist auf und ist mit einer Pumpeinrichtung versehen. Mittels der Pumpeinrichtung ist der Verdampfer mindestens mit dem verflüssigten Teilvolumen des Kältemittels beaufschlagbar.

Die WO 03/059664 A1 offenbart einen mehrfach verzweigten Kältemittelkreislauf zur Kühlung von Fahrzeugkomponenten dessen Verzweigungen mittels Ventilen steuerbar sind. Die WO 2008/026386 A1 zeigt ebenso einen Kühlanlage zur Kühlung von Fahrzeugbatterien mittels einer Kälteanlage. In der WO 2008/025915 A1 sind kombinierte Batteriekühl- und Klimaanlagen vorgeschlagen deren Kreisläufe teils mehrfach verzweigt sind. Die in diesen Schriften offenbarten Kühlanlagen für Fahrzeugkomponenten werden allesamt konventionell über einen Verdichter umgewälzt.

Dabei ist je nach Lastfall die vorgesehene Kühlung über die vorgeschlagene Kälteanlage trotz des zusätzlichen Pumpenbetriebs nur im Teillastbetrieb der Kälteanlage und somit mit schlechten Wirkungsgraden möglich.

Alternativ kann, wie in der DE 101 28 164 A1 beschrieben, zum Kühlen des Elektroaggregats ein von dem Kältekreislauf der Kälteanlage separater Kühlmittelkreislauf vorgesehen sein. Der Kühlmittelkreislauf kann als Kühlmittel eine Sole, insbesondere ein Wasser-Glysantin-Gemisch enthalten. Das Kühlmittel kann mittels der zum Kühlen des Fahrgastraums vorgesehenen Kälteanlage gekühlt werden. Hierbei wird das Kühlmittel mittels eines Verdampfers, welcher in einem Kältekreislauf der Kälteanlage zum Kühlen des Fahrgastraums angeordnet ist, gekühlt. Das gekühlte Kühlmittel wird über den separaten Kühlmittelkreislauf dem Elektroaggregat zugeführt.

Bei einer derartigen Kühlanordnung ist der Umstand als nachteilig anzusehen, dass beim Kühlen des Kühlmittels in dem separaten Kühlmittelkreislauf, insbesondere beim Nutzen des in den Kältekreislauf der Kälteanlage integrierten Verdampfers, eine ineffiziente Wärmetransportkette gegeben ist.

Des Weiteren ist es aus dem Stand der Technik bekannt, das Kühlmittel des separaten Kühlmittelkreislaufs, etwa eine Wasser-Glykol-Gemisch, kann bei niedrigen Umgebungstemperaturen mit Umgebungsluft zu kühlen. Beim Kühlen des separaten Kühlmittelkreislaufs mittels der Umgebungsluft des Kraftfahrzeugs kann der Kühler zum Kühlen des Kühlmittels in lufthydraulisch und thermisch ungünstiger Weise im Bereich anderer, etwa zum Kühlen eines Motorkühlmittels vorgesehener, Kühler oder in strömungstechnisch vergleichsweise ungünstiger Weise im Unterbodenbereich des Kraftfahrzeugs angeordnet sein.

Aufgabe der vorliegenden Erfindung ist es daher, eine Kühlanordnung der eingangs genannten Art zu schaffen, mittels welcher ein besonders effizientes Kühlen eines temperaturempfindlichen Aggregats eines Kraftfahrzeugs ermöglicht ist.

Diese Aufgabe wird erfindungsgemäß durch eine Kühlanordnung mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Die erfindungsgemäße Kühlanordnung zum Kühlen eines temperaturempfindlichen Aggregats, insbesondere Elektroaggregats, eines Kraftfahrzeugs, mit einem Kondensator zum Verflüssigen zumindest eines Teilvolumens eines Kältemittels in einem Kältekreislauf und mit einem stromabwärts des Kondensators angeordneten Verdampfer, welcher mit dem Kältemittel beaufschlagbar und welchem Wärme des temperaturempfindlichen Aggregats, insbesondere Elektroaggregats, zuführbar ist, weist eine Pumpeinrichtung auf, mittels welcher der Verdampfer zumindest mit dem verflüssigten Teilvolumen des Kältemittels beaufschlagbar ist.

Die Pumpeinrichtung ist hierbei als Flüssigkeits-Pumpeinrichtung ausgebildet, welche zum Fördern des verflüssigten Teilvolumens des Kältemittels ausgelegt ist. Demgegenüber ist ein Verdichter eines Kältekreislaufs zum Verdichten und Fördern von gasförmigem Kältemittel ausgelegt, wobei ein Beaufschlagen des Verdichters mit flüssigem Kältemittel die Funktionsfähigkeit des Verdichters beeinträchtigt.

Der Kältekreislauf weist des weiteren stromabwärts des Verdampfers und stromaufwärts des Kondensators einen Verdichter zum Verdichten des Kältemittels auf, wobei dem Verdampfer ein Expansionselement zum Entspannen des verdichteten Kältemittels vorgeschaltet ist und wobei eine Überbrückungseinrichtung zum Überbrücken des Verdichters beim Beaufschlagen des Verdampfers mittels der Pumpeinrichtung vorgesehen ist.

Der Erfindung liegt die Erkenntnis zugrunde, dass insbesondere bei Temperaturen der das Kraftfahrzeugs umgebenden Umgebungsluft von weniger als 20° C Wärme des temperaturempfindlichen Aggregats mit besonders geringem Energieaufwand, nämlich lediglich dem zum Betreiben der Pumpeinrichtung notwendigen Energieaufwand, an die Umgebung abgeführt werden kann. Hierbei fördert die Pumpeinrichtung zumindest das mittels des Kondensators verflüssigte Teilvolumen des Kältemittels zu dem Verdampfer, wobei dem temperaturempfindlichen Aggregat Wärme in Form von latenter Wärme entzogen wird, welche zum Überführen des verflüssigten Kältemittels in einen gasförmigen Zustand aufzubringen ist. Dadurch ist ein besonders effizientes Kühlen des temperaturempfindlichen Aggregats, insbesondere Elektroaggregats, des Kraftfahrzeugs ermöglicht.

Erst bei vergleichsweise hohen, also bei etwa über 25° C liegenden Umgebungstemperaturen, wenn also die Temperatur der Umgebungsluft die Temperatur des temperaturempfindlichen Aggregats übersteigt wird zum Verflüssigen des Kältemittels des Kondensators ein Beaufschlagen des Kondensators mit mittels des Verdichters verdichtetem Kältemittel erforderlich. Je nach Lastbedingungen des Elektroaggregats kann ein Kühlen des Elektroaggregats, insbesondere durch getaktetes Betreiben der Pumpeinrichtung, auch noch bei Umgebungstemperaturen von bis zu 27°C möglich sein, sofern der Kondensator gut von Umgebungsluft umströmt wird, etwa beim zügiger Fahrt des Kraftfahrzeugs.

Von Vorteil ist hierbei weiterhin, dass der Kondensator, welcher an lufthydraulisch besonders günstiger Position des Kraftfahrzeugs anordenbar ist, zur besonders effizienten Abfuhr von Wärme des temperaturempfindlichen Aggregats, insbesondere Elektroaggregats, nutzbar ist. Demgegenüber ist beim Kühlen des temperaturempfindlichen Aggregats, insbesondere Elektroaggregats, mittels des aus dem Stand der Technik bekannten separaten Kühlmittelkreislaufs der Kühler zum Kühlen des Kühlmittels in lufthydraulisch und thermisch ungünstiger Weise vor dem Kondensator angeordnet oder in einem thermisch und strömungstechnisch ungünstigen Bereich, etwa dem Unterboden des Kraftfahrzeugs, einem Radkasten oder dergleichen.

Durch ein Verzichten auf den separaten Kühlmittelkreislauf ist die Kühlanordnung besonders kompakt und kostengünstig auszubilden.

Ebenso ist ein besonders effizientes Kühlen des temperaturempfindlichen Aggregats, insbesondere Elektroaggregats, dadurch ermöglicht, dass keine Wärmeübertragsverluste bei einem Wärmeübergang zwischen unterschiedlichen Wärmeübertragermedien, etwa dem Kältemittel und dem Kühlmittel, auftreten.

Darüber hinaus können Leitungen des Kältekreislaufs, welche das Kältemittel dem temperaturempfindlichen Aggregat, insbesondere dem Elektroaggregat, zuführen, einen wesentlich geringeren Querschnitt aufweise, als Leitungen des separaten, das Kühlmittel fördernden Kühlmittelkreislaufs. weniger effizientes Kühlen des temperaturempfindlichen Aggregats gegeben und es können Temperaturunterschiede innerhalb des gekühlten temperaturempfindlichen Aggregats von ca. 5° K auftreten.

Durch direktes Kühlen des temperaturempfindlichen Aggregats mittels des verdampfenden Kältemittels ist also ein Kühlen bei höheren Umgebungstemperaturen möglich als beim Nutzen des separaten Kühlmittelkreislaufs zum Kühlen.

In einer vorteilhaften Ausgestaltung der Erfindung ist die, insbesondere als Tauchpumpe ausgebildete, Pumpeinrichtung an einer, insbesondere stromabwärts des Kondensators angeordneten Sammeleinrichtung zum Sammeln des verflüssigten Teilvolumens des Kältemittels angeordnet. Dadurch weist die Pumpeinrichtung ein besonders gutes Anlaufverhalten auf. Die Pumpeinrichtung kann hierbei insbesondere in die Sammeleinrichtung integriert ausgebildet sein, so dass keine zusätzlich zu den zum Anordnen der Sammeleinrichtung in dem Kältekreislauf ohnehin vorzusehenden Trennstellen anzuordnen sind.

Des Weiteren hat es sich als vorteilhaft gezeigt, wenn der Kältekreislauf stromabwärts des Verdampfers und stromaufwärts des Kondensators einen Verdichter zum Verdichten des Kältemittels aufweist, wobei dem Verdampfer ein Expansionselement zum Entspannen des verdichteten Kältemittels vorgeschaltet ist, und wobei eine Überbrückungseinrichtung zum Überbrücken des Verdichters beim Beaufschlagen des Verdampfers mittels der Pumpeinrichtung vorgesehen ist. Dadurch ist es ermöglicht, das temperaturempfindliche Aggregat zu kühlen, auch wenn vergleichsweise hohe, also etwa über 25° C liegende, Umgebungstemperaturen vorliegen, wenn also die Temperatur der Umgebungsluft die Temperatur des temperaturempfindlichen Aggregats übersteigt. In diesem Fall ist zum Verflüssigen des Kältemittels des Kondensators ein Beaufschlagen des Kondensators mit mittels des Verdichters verdichtetem Kältemittel erforderlich.

Die Überbrückungseinrichtung zum Überbrücken des Verdichters beim Beaufschlagen des Verdampfers mittels der Pumpeinrichtung kann in vorteilhafter Weise ein Rückschlagventil aufweisen, welches beim Beaufschlagen des Verdampfers mittels der Pumpeinrichtung von dem Kältemittel durchströmbar ist. Dadurch ist ein besonders einfaches, betriebsphasenabhängiges Schließen und/oder Öffnen der Überbrückungseinrichtung ermöglicht. Beim Betreiben des Verdichters zum Beaufschlagen des Kondensators mit verdichtetem Kältemittel schließt das Rückschlagventil die Überbrückungseinrichtung aufgrund des auf das Rückschlagventil wirkenden Drucks.

Es kann vorgesehen sein, dass mittels des Verdichters das Kältemittel mit einem Druck beaufschlagbar ist, welcher größer ist als ein beim Durchströmen des Kältemittels durch die Pumpeinrichtung maximal mittels der Pumpeinrichtung aufbringbarer Staudruck. Der Verdichter kann also ein Durchströmen der als Rückschlagventil wirkenden Pumpeinrichtung bewirken.

Ergänzend oder alternativ kann eine, insbesondere ein Rückschlagventil aufweisende Überbrückungseinrichtung zum Überbrücken der Pumpeinrichtung beim Beaufschlagen des Verdampfers mittels des Verdichters vorgesehen sein. Dadurch kann beim Betreiben des Verdichters das Kältemittel ungehindert an der Pumpeinrichtung vorbeiströmen. Weist die Überbrückungseinrichtung ein Rückschlagventil auf, so ist zudem ein Ausbilden einer Kurzschlussströmung in der Sammeleinrichtung beim Betreiben der Pumpeinrichtung verhindert.

Von Vorteil ist es weiterhin, wenn eine von dem Kältemittel durchströmbare Umgehungseinrichtung zum Umgehen des Expansionselements vorgesehen ist, welche mittels einer ersten Absperreinrichtung absperrbar ist. Dadurch kann zumindest das verflüssigte Teilvolumen des Kältemittels drosselfrei und somit besonders effizient mittels der Pumpeinrichtung zu dem Verdampfer gefördert werden. Eine durch die Pumpeinrichtung zum Fördern des verflüssigten Teilvolumens des Kältemittels aufzubringenden Leistung kann dadurch minimiert werden. So kann bei außer Betrieb genommenen Verdichter mittels der Pumpeinrichtung bei einem Energieaufwand von weniger als 30 W das temperaturempfindliche Aggregat wirksam gekühlt werden, sofern die Temperatur der Umgebungsluft des Kraftfahrzeugs 20° C unterschreitet. Eine maximale Temperatur des Verdampfers, welchem Wärme des Elektroaggregats zugeführt wird, beträgt hierbei etwa 30° C. Ein Energiebedarf des Kraftfahrzeugs zum Kühlen des Elektroaggregats ist also besonders gering.

In einer weiteren vorteilhaften Ausgestaltung der Erfindung ist dem Expansionselement eine zweite Absperreinrichtung zugeordnet, mittels welcher ein Durchströmen des Expansionselements zu unterbinden ist. Dadurch kann sichergestellt werden, dass das verflüssigte Kältemittel drosselfrei dem Verdampfer zuströmt, wenn die Pumpeinrichtung betrieben wird.

Selbstverständlich können die erste Absperreinrichtung und die zweite Absperreinrichtung beispielsweise in ein Drei-Wege-Ventil integriert ausgebildet sein.

Von Vorteil ist es weiterhin, wenn der Kältekreislauf einen weiteren Verdampfer zum Kühlen eines Fahrgastraums des Kraftfahrzeugs aufweist, welchem ein weiteres Expansionselement zum Entspannen des mittels des Verdichters verdichteten Kältemittels vorgeschaltet ist. Dadurch können beim Betreiben des Kältekreislaufs mittels des Verdichters, also bei vergleichsweise hohen Umgebungstemperaturen, der dem temperaturempfindlichen Aggregat zugeordnete Verdampfer und gleichzeitig der weitere Verdampfer mit dem verdichten Kältemittel beaufschlagt werden. So ist einerseits das effiziente Kühlen des Elektroaggregats gewährleistet und gleichzeitig mittels des Kältekreislaufs eine komfortable Kühlung des Fahrgastraums erreichbar.

Als weiter vorteilhaft hat es sich gezeigt, wenn mittels der Pumpeinrichtung in dem Kältekreislauf eine maximale Differenz zwischen einem stromaufwärts und stromabwärts der Pumpeinrichtung herrschenden Druck einstellbar ist, wobei das weitere Expansionselement mittels dieser maximalen Differenz in eine Schließstellung überführbar ist. Dadurch kann bei vergleichsweise kühlen Umgebungsbedingungen, wenn also kein Kühlen des Fahrgastraums notwendig und ausschließlich das temperaturempfindliche Aggregat zu kühlen ist, sichergestellt werden, dass das von der Pumpeinrichtung geförderte verflüssigte Teilvolumen des Kältemittels dem Verdampfer zugeführt wird, welcher dem temperaturempfindlichen Aggregat zugeordnet ist. Das weitere Expansionselement kann hierbei beispielsweise als thermostatisches Expansionsventil ausgebildet sein.

Ergänzend, bevorzugt aber alternativ, kann dem weiteren Expansionselement eine weitere Absperreinrichtung zugeordnet sein, mittels welcher ein Durchströmen des weiteren Expansionselement zu unterbinden ist.

In einer weiteren vorteilhaften Ausgestaltung der Erfindung ist das weitere Expansionselement in eine Offenstellung überführbar, in welcher das weitere Expansionselement zumindest im Wesentlichen ungehindert von dem Kältemittel durchströmbar ist. Hierbei kann das weitere Expansionselement als elektrisch regelbares Expansionselement ausgebildet sein, so dass beim Beaufschlagen des Verdampfers mit dem verflüssigten Teilvolumen des Kältemittels das verflüssigte Kältemittel dem Verdampfer zum Kühlen des Fahrgastraums drosselfrei zugeführt werden kann.

Dies ist insbesondere dann sinnvoll, wenn etwa bei einem Umluftbetrieb dem Fahrgastraum zuströmende Luft durch einen erhöhten Wärmeeintrag auf eine Temperatur über der Umgebungstemperatur erwärmt wird. Das Erwärmen kann hierbei durch Betreiben einer Verbrennungskraftmaschine des Kraftfahrzeugs, einen Gebläsemotor, und/oder weitere elektronische Bauteile bewirkt sein. Des Weiteren kann insbesondere das Betreiben einer Verbrennungskraftmaschine und/oder einer Abgasanlage unter hoher Last und/oder starke Sonneneinstrahlung zu einem Erwärmen der in dem Fahrgastraum zuströmenden Luft führen. Hierbei können sich vor dem zum Kühlen des Fahrgastraums vorgesehenen, weiteren Verdampfer Temperaturen einstellen, welche um deutlich mehr als 10° K über der Umgebungstemperatur des Kraftfahrzeugs liegen.

Durch Beaufschlagen des weiteren, zum Kühlen des Fahrgastraums vorgesehenen Verdampfers mittels der Pumpeinrichtung kann die über die Umgebungstemperatur erwärmte Luft so gekühlt werden, dass in den Fahrgastraum Luft mit einer komfortablen Temperatur einströmt, ohne dass der Verdichter in dem Kältekreislauf in Betrieb genommen zu werden braucht. Wird der Verdichter beim Betreiben des Verbrennungskraftmaschine mit angetrieben, so bringt ein Außer-Betrieb-Nehmen des Verdichters eine Kraftstoffeinsparung mit sich.

Des Weiteren hat es sich als vorteilhaft gezeigt, wenn das Expansionselement und die Absperreinrichtungen oder die Expansionselemente und die Absperreinrichtungen in ein Beaufschlagungsmodul integriert ausgebildet sind. Dadurch sind in dem Kältekreislauf weniger Trennstellen anzuordnen als bei einem getrennten Anschließen der einzelnen Komponenten in dem Kältekreislauf. Somit ist eine Anfälligkeit des Kältekreislaufs gegenüber Leckagen verringert.

Sofern dem Verdichter ein innerer Wärmetauscher vorgeschaltet ist, mittels welchem Wärme zwischen dem verdichteten Kältemittel und dem aus dem Verdampfer austretenden Kältemittel austauschbar ist, weist der Kältekreislauf in vorteilhafter Weise eine beim Beaufschlagen des Verdampfers mittels der Pumpeinrichtung durchströmbare, insbesondere das Expansionselement überbrückende, Überbrückungseinrichtung zum Überbrücken des inneren Wärmetauschers auf. Dadurch kann ein Unterschied der Temperatur am Kondensator und an dem Verdampfer, welcher dem temperaturempfindlichen Aggregat zum Kühlen zugeordnet ist, besonders weitgehend ausgenutzt werden.

Die für die erfindungsgemäße Kühlanordnung beschriebenen bevorzugten Ausführungsformen und Vorteile gelten auch für das erfindungsgemäße Verfahren zum Kühlen eines Elektroaggregats eines Kraftfahrzeugs.

Weitere Vorteile, Merkmale und Einzelheiten der Erfindung ergeben sich aus der nachfolgenden Beschreibung bevorzugter Ausführungsbeispiele sowie anhand der Zeichnungen, in welchen gleiche oder funktionsgleiche Elemente mit identischen Bezugszeichen versehen sind. Dabei zeigen:
- Fig. 1: ein erstes Ausführungsbeispiel einer Kühlanordnung zum Kühlen eines Elektroaggregats eines Kraftfahrzeugs, wobei mittels einer Pumpeinrichtung ein mittels eines Kondensators verflüssigtes Kältemittel zu einem Verdampfer zu fördern ist, welchem Wärme des Elektroaggregats zuführbar ist;
- Fig. 2: ein Druck-Enthalpie-Diagramm zum Veranschaulichen eines Verfahrens zum Kühlen des Elektroaggregats mittels eines in der Kühlanordnung gemäß Fig. 1 angeordneten Verdichters;
- Fig. 3: ein Druck-Enthalpie-Diagramm zum Veranschaulichen eines Kühlvorgangs beim Kühlen des Elektroaggregats mittels der Pumpeinrichtung gemäß Fig. 1;
- Fig. 4: eine Kühlanordnung zum Kühlen des Elektroaggregats sowie von Luft in einem Klimakasten, über welchen die Luft einem Fahrgastraum des Kraftfahrzeugs zuführbar ist, gemäß einem zweiten Ausführungsbeispiel; und
- Fig. 5: eine Kühlanordnung zum Kühlen des Elektroaggregats gemäß einem dritten Ausführungsbeispiel.

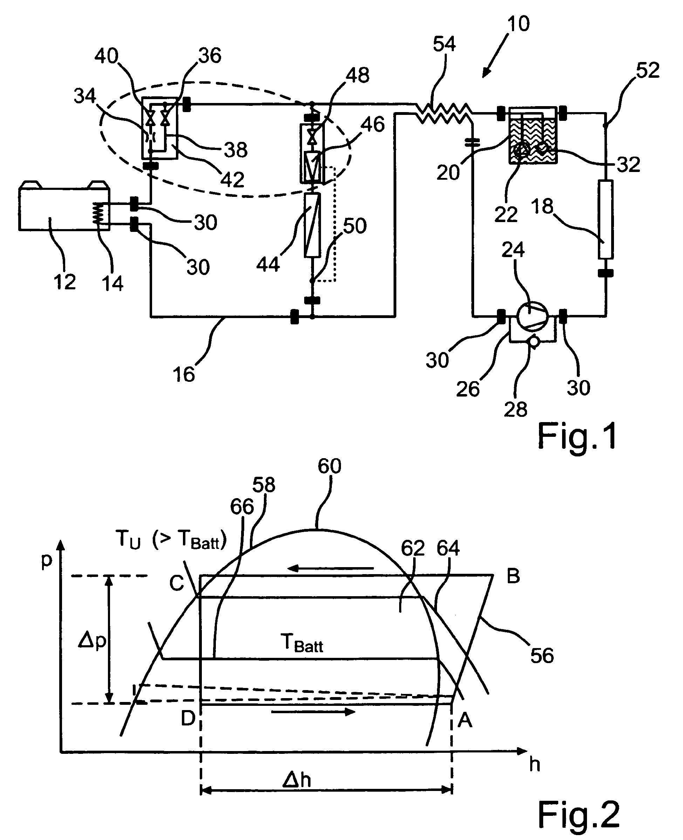

Fig. 1 zeigt schematisch eine Kühlanordnung 10 zum Kühlen eines Elektroaggregats 12, welches vorliegend als Lithium-Ionen-Batterie eines nicht näher gezeigten Kraftfahrzeugs ausgebildet ist. Selbstverständlich kann das Elektroaggregat 12 auch als Brennstoffzelle oder dergleichen unter Last Wärme freisetzendes Aggregat bzw. als infolge eines externen Wärmeeintrags erwärmbares, temperaturempfindliches Aggregat ausgebildet sein.

Zum Kühlen des Elektroaggregats 12 ist an diesem ein Verdampfer 14 angeordnet, welcher in einen Kältekreislauf 16 der Kühlanordnung 10 eingebunden ist. In dem Kältekreislauf 16 ist des Weiteren ein Kondensator 18 angeordnet, mittels welchem ein in dem Kältekreislauf 16 zirkulierendes Kältemittel zu verflüssigen ist.

Stromabwärts des Kondensators 18 ist eine Sammeleinrichtung 20 zum Sammeln des mittels des Kondensators 18 verflüssigten Kältemittels angeordnet. Eine vorliegend als Tauchpumpe ausgebildete Pumpeinrichtung 22 ist in der Sammeleinrichtung angeordnet und zum Fördern von verflüssigtem Kältemittel ausgelegt.

Insbesondere bei Umgebungstemperaturen von weniger als 20° C kann das Kältemittel in dem Kondensator 18 verflüssigt und in verflüssigtem Zustand dem Verdampfer 14 zugeführt werden. Liegt eine Temperatur des Verdampfers 14 über der Umgebungstemperatur, so kann das flüssige Kältemittel in dem Verdampfer 14 teilweise oder komplett verdampfen, dem Kondensator 18 wieder zuströmen und dort wieder zumindest teilweise verflüssigt werden. Zum Verdampfen des flüssigen Kältemittels in dem Verdampfer 14 wird dem Verdampfer 14 hierbei die Wärme des Elektroaggregats 12 zugeführt und das Elektroaggregat 12 entsprechend gekühlt.

Wie in Fig. 1 erkennbar ist, ist in dem Kältekreislauf 16 dem Kondensator 18 ein Verdichter 24 vorgeschaltet. Beim Beaufschlagen des Verdampfers 14 mit verflüssigtem Kältemittel mittels der Pumpeinrichtung 22 strömt das vom Verdampfer 14 kommende, zumindest teilweise verdampfte Kältemittel über eine Überbrückungseinrichtung 26 zum Überbrücken des Verdichters 24 an dem Verdichter 24 vorbei.

Die Überbrückungseinrichtung 26 weist ein Rückschlagventil 28 auf, welches beim Beaufschlagen des Verdampfers 14 mittels der Pumpeinrichtung 22 von dem Kältemittel durchströmbar ist. Das Rückschlagventil 28 und die Überbrückungseinrichtung 26 sind vorliegend in den Verdichter 24 integriert ausgebildet. Somit sind infolge des Vorsehens der Überbrückungseinrichtung 26 mit dem Rückschlagventil 28 nicht mehr Trennstellen 30 in dem Kältekreislauf 16 vorzusehen, als beim Anordnen des Verdichters 24 ohnehin vorzusehen sind. Dies ist im Hinblick darauf von Bedeutung, dass eine Erhöhung einer Anzahl der Trennstellen 30, welche in der Fig. 1 jeweils stromaufwärts und stromabwärts der Komponenten des Kältekreislaufs 16 schematisch angedeutet sind, zu einer höheren Leckageanfälligkeit der Kühlanordnung 10 führen könnte.

Ein in der Sammeleinrichtung 20 angeordnetes Rückschlagventil 32 ist parallel zu der Pumpeinrichtung 22 angeordnet, so dass beim Beaufschlagen des Verdampfers 14 mittels des Verdichters 24 die Pumpeinrichtung 22 überbrückbar ist.

Der Verdichter 24 wird vorliegend zum Beaufschlagen des Verdampfers 14 herangezogen, wenn eine Differenz zwischen der Umgebungstemperatur und der am Verdampfer 14 vorliegenden Temperatur nicht zum Kühlen des Elektroaggregats 12 ausreichend ist. Insbesondere bei Umgebungstemperaturen von weniger als 20° C ist jedoch ein Kühlen des Elektroaggregats 12 mittels des von der Pumpeinrichtung 22 mit flüssigem Kältemittel beaufschlagten Verdampfers 14 ermöglicht.

Beim Beaufschlagen des Verdampfers 14 mit Kältemittel mittels des Verdichters 24 wird das verdichtete, in den Kondensator 18 verflüssigte Kältemittel mittels eines dem Verdampfer 14 vorgeschalteten Expansionselements 34 entspannt. Das Expansionselement 34 kann als Fixdrossel ausgebildet sein.

Damit beim Beaufschlagen des Verdampfers 14 mit dem verflüssigten Kältemittel aus der Sammeleinrichtung 20 mittels der Pumpeinrichtung 22 das verflüssigte Kältemittel drosselfrei dem Verdampfer 14 zugeführt werden kann, ist eine erste Absperreinrichtung 36 in dem Kältekreislauf 16 zu öffnen, und dadurch eine Umgehungseinrichtung 38 zum Umgehen des Expansionselements 34 freizugeben.

Soll hingegen der Verdampfer 14 mit entspanntem Kältemittel beaufschlagt werden, ist also der Verdichter 24 in Betrieb, so ist die Umgehungseinrichtung 38 mittels der ersten Absperreinrichtung 36 absperrbar. Gleichzeitig kann eine zweite Absperreinrichtung 40, welche dem Expansionselement 34 vorgeschaltet ist, geöffnet werden.

Selbstverständlich können die Absperreinrichtungen 36, 40 und das Expansionselement 34 in ein Beaufschlagungsmodul 42 integriert ausgebildet sein, wodurch eine Anzahl an Trennstellen 30 gering gehalten werden kann.

Gemäß Fig. 1 weist der Kältekreislauf 16 einen weiteren Verdampfer 44 auf, welcher zum Kühlen eines Fahrgastraums des Kraftfahrzeugs vorgesehen ist. Der weitere Verdampfer 44 ist in dem Kältekreislauf 16 dem Verdampfer 14 zum Kühlen des Elektroaggregats 12 parallel geschaltet.

Beim Betreiben der Kühlanordnung 10 zum Kühlen des Fahrgastraums und zum gleichzeitigen Kühlen des Elektroaggregats 12, also bei vergleichsweise hohen Umgebungstemperaturen, zirkuliert das Kältemittel in dem Kältekreislauf 16 aufgrund des Betreibens des Verdichters 24.

Dem weiteren Verdampfer 44 zum Kühlen des Fahrgastraums des Kraftfahrzeugs ist gemäß Fig. 1 ein weiteres Expansionselement 46 vorgeschaltet, mittels welchem das mittels des Verdichters 24 verdichtete, in dem Kondensator 18 verflüssigte Kältemittel entspannbar ist. Das weitere Expansionselement 46 kann als thermostatisches Expansionsventil ausgebildet sein.

Gemäß dem in Fig. 1 gezeigten Ausführungsbeispiel der Kühlanordnung 10 ist dem weiteren Expansionselement 46 eine weitere Absperreinrichtung 48 vorgeschaltet, mittels welcher ein Durchströmen des weiteren Expansionselements 46 zu unterbinden ist. Selbstverständlich können das weitere Expansionselement 46 und die vorgeschaltete Absperreinrichtung 48 ebenfalls in das Beaufschlagungsmodul 42 integriert ausgebildet sein. Dadurch ist eine Anzahl an Trennstellen 30 in dem Kältekreislauf 16 weiter reduziert.

Dem als thermostatisches Expansionsventil ausgebildeten Expansionselement 46 ist gemäß Fig. 1 ein Temperaturfühler 50 zugeordnet, mittels welchem eine Temperatur stromabwärts des weiteren Verdampfers 44 erfassbar ist.

Des Weiteren ist in Fig. 1 erkennbar, dass zwischen dem Kondensator 18 und der Sammeleinrichtung 20 ein Drucksensor 52 angeordnet ist.

Darüber hinaus zeigt Fig. 1, dass dem Verdichter 24 ein innerer Wärmetauscher 54 vorgeschaltet ist, mittels welchem Wärme zwischen den verdichteten Kältemittel und den Verdampfern 14, 44 austretenden Kältemittel austauschbar ist. Durch den inneren Wärmetauscher 54 ist eine Effizienz der Kühlanordnung 10 erhöht. Zudem ist aufgrund des inneren Wärmetauschers 54 auch bei Verwenden des als kostengünstige Fixdrossel ausgebildeten, dem Verdampfer 14 vorgeschalteten Expansionselements 34 sichergestellt, dass dem Verdichter 24 kein flüssiges Kältemittel zugeführt wird, auch wenn der weitere Verdampfer 44 nicht betrieben wird.

Das dem weiteren Expansionsorgan 46 vorgeschaltete Absperrventil 48 kann entfallen, insbesondere wenn das beispielsweise als thermostatisches Expansionsventil ausgelegte weitere Expansionselement 46 sich bei Vorliegen einer geringen Druckdifferenz stromaufwärts und stromabwärts der Pumpeinrichtung 22 in einer Schließstellung befindet. Eine solche geringe, das Expansionselement 46 in eine Schließstellung überführende, Druckdifferenz ist vorliegend in dem Kältekreislauf 16 gegeben, wenn der Verdampfer 14 mittels der Pumpeinrichtung 22 mit Kältemittel beaufschlagt wird.

Fig. 2 zeigt ein Druck-Enthalpie-Diagramm, wobei auf einer Ordinate logarithmisch ein Druck p des Kältemittels in dem Kältekreislauf 16, und auf einer Ordinate eine Enthalpie h des Kältemittels aufgetragen sind.

Ein Linienzug 56 veranschaulicht eine Zustandsänderung des sich in dem Kältekreislauf gemäß Fig. 1 befindenden Kältemittel beim Kühlen des Elektroaggregats 12, wobei zum Beaufschlagen des Verdampfers 14 der Verdichter 24 betrieben wird. In dem Druck-Enthalpie-Diagramm gemäß Fig. 2 ist zudem eine Phasengrenzlinie 58 eingezeichnet, welche bis zu einem Scheitelpunkt 60 einen ansteigenden, und nach dem Scheitelpunkt 60 einen abfallenden Verlauf aufweist. Der Scheitelpunkt 60 stellt gleichzeitig einen kritischen Punkt dar, so dass bei Überschreiten des dem kritischen Punkt zugeordneten Drucks p überkritische Verhältnisse vorliegen.

Bei Drücken p unterhalb des kritischen Punkts liegt gemäß Fig. 2 bei vergleichsweise niedrigen Enthalpiewerten das Kältemittel in flüssigem Zustand vor. In einem durch die Phasengrenzlinie 58 nach oben abgegrenzten Bereich 62 liegt ein Gemisch an flüssigem und gasförmigem Kältemittel vor. Bei verhältnismäßig hohen Enthalpiewerten des Kältemittels liegt das Kältemittel vollständig als gasförmige Phase vor.

Ein Eckpunkt A des Linienzugs 56 beschreibt einen Zustand des Kältemittels, in welchem es bei vergleichsweise niedrigem Druck P und mit vergleichsweise großer Enthalpie h am Eingang des Verdichters 24 vorliegt. Ein Eckpunkt B veranschaulicht den Zustand des mittels des Verdichters 24 verdichteten, gasförmigen Kältemittels.

Im Kondensator 18 und in dem diesem nachgeschalteten inneren Wärmetauscher 54 wird das unter hohem Druck stehende Kältemittel isobar verflüssigt. Der verflüssigte Zustand des Kältemittels ist durch den Eckpunkt C des Linienzugs 56 in Fig. 2 veranschaulicht. Beim Entspannen mittels des Expansionselements 34 bzw. 46 verringert sich der Druck p des Kältemittels um eine Druckdifferenz Δp, welche beim Verdichten des Kältemittels von dem Verdichter 24 aufzubringen ist.

Eine in Fig. 2 angegebene Temperaturlinie 64 veranschaulicht eine Temperatur Tᵤ der Umgebungsluft. Diese ist höher als eine an dem Elektroaggregat 12 vorliegende Temperatur T_{Batt}, welche durch eine zweite Temperaturlinie 66 in Fig. 2 dargestellt ist.

In dem Verdampfer 14 bzw. 44 und in dem inneren Wärmetauscher 54 nimmt das Kältemittel durch Verdampfen der flüssigen Phase Wärme auf, seine Enthalpie ändert sich isobar um eine in der Fig. 2 dargestellte Enthalpiedifferenz Δh, welche einem Abstand zwischen den Eckpunkten D und A des Linienzugs 56 entspricht. Aus Fig. 2 ist erkennbar, dass zum Abführen von Wärme des Elektroaggregats 12, also zum Beaufschlagen des Kältemittels mit der Enthalpiedifferenz Δh durch den Verdichter 24 eine vergleichsweise hohe, der Druckdifferenz Δp entsprechende Druckänderungsarbeit aufzuwenden ist.

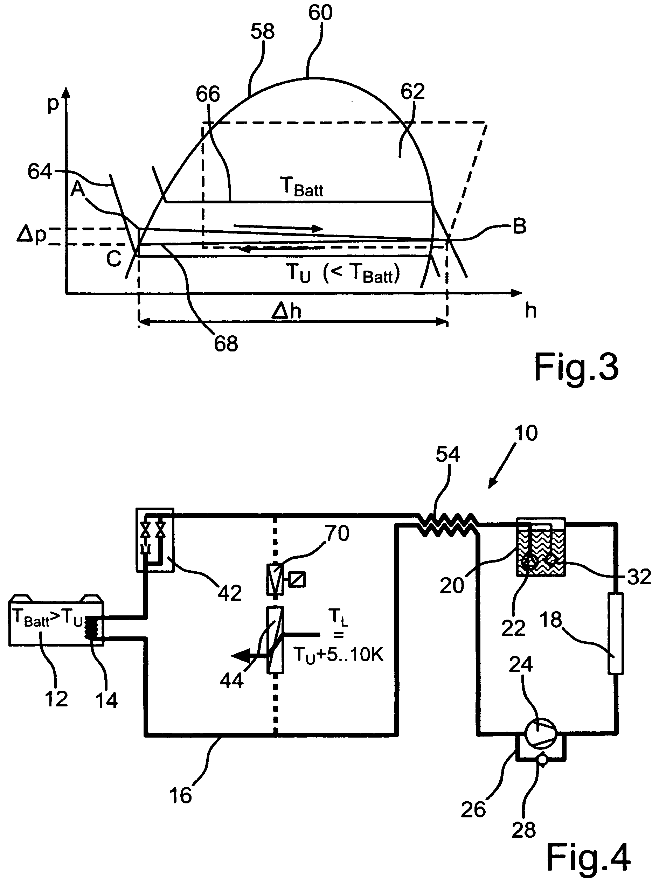

Fig. 3 zeigt einen Linienzug 68 in dem Druck-Enthalpie-Diagramm gemäß Fig. 2, welcher eine Zustandsänderung des Kältemittels beim Beaufschlagen des Verdampfers 14 mittels der Pumpeinrichtung 22 veranschaulicht.

Hierbei ist eine die Temperatur Tᵤ der Umgebungsluft veranschaulichende Temperaturlinie 64 unterhalb der Temperaturlinie 66 angeordnet, die Temperatur Tᵤ der Umgebungsluft ist also niedriger als die Temperatur des mittels des Verdampfers 14 gekühlten Elektroaggregats 12. Der Eckpunkt C des Linienzugs 68 veranschaulicht den Zustand des nach dem des stromabwärts des Kondensators 18 vorliegenden, flüssigen Kältemittels. Mittels der Pumpeinrichtung 22 wird ein Druck des flüssigen Kältemittels minimal, um die in Fig. 3 angegebene Druckdifferenz Δp erhöht, der entsprechende Zustand des Kältemittels ist durch den Eckpunkt A angegeben.

Beim Überführen des flüssigen Kältemittels in gasförmiges Kältemittel durch Wärmeaufnahme von dem Elektroaggregat 12 in dem Verdampfer 14 ändert sich die Enthalpie h des Kältemittels um eine vergleichweise große Enthalpiedifferenz Δh. Das beim Eckpunkt B, also stromabwärts des Verdampfers 14 vollständig gasförmig vorliegende Kältemittel wird mittels des Kondensators 18 verflüssigt, was in Fig. 3 durch eine den Eckpunkt B mit dem Eckpunkt C verbindende Linie des Linienzugs 68 dargestellt ist.

Der Linienzug 68 liegt, wie Fig. 3 zu entnehmen ist, vollständig innerhalb eines durch die Temperaturlinien 64, 66 begrenzten Bereichs. Bei Zustandsänderungen des Kältemittels innerhalb dieses Bereichs ist die über das Kältemittel dem Elektroaggregat 12 entziehbare Wärmemenge, also die auf das Kältemittel übertragbare Enthalpiedifferenz Δh, größer als die Enthalpiedifferenz Δh, welche in Fig. 2 dargestellt ist.

Wie aus Fig. 3 hervorgeht, finden Verdampfen und Verflüssigen des Kältemittels beim direkten Kühlen des Elektroaggregats 12 mittels des von der Pumpeinrichtung 22 mit flüssigem Kältemittel beaufschlagten Verdampfers 14 auf einem nahezu gleichen Niveau des Drucks p statt.

Fig. 4 zeigt ein weiteres Ausführungsbeispiel einer Kühlanordnung 10, welche sich von der in Fig. 1 gezeigten Kühlanordnung 10 darin unterscheidet, dass dem weiteren Verdampfer 44 ein durch Ansteuern in eine Offenstellung überführbares alternatives weiteres Expansionselement 70 vorgeschaltet ist.

Das alternative weitere Expansionselement 70 kann als elektrisch geregeltes Expansionsventil, etwa als Magnetventil ausgebildet sein. In einer Schließstellung des weiteren Expansionselements 70 dient das weitere Expansionselement 70 als Absperrventil. In einer durch Ansteuern des weiteren Expansionselements 70 einstellbaren Offenstellung des weiteren Expansionselements 70 ist das weitere Expansionselement 70 weitgehend drosselfrei durchströmbar.

Diese Funktion des Überführens des weiteren Expansionselements 70 in die Offenstellung kann genutzt werden, wenn die vor dem weiteren Verdampfer 44 vorliegende Luft eine höhere Temperatur T_{L} aufweist, als die Temperatur Tᵤ der Umgebungsluft. Beispielsweise kann die dem weiteren Verdampfer 44 in einem Klimakasten des Kraftfahrzeugs zuströmende Luft durch Wärmeeintrag von einer insbesondere unter hoher Last betriebenen Verbrennungskraftmaschine und/oder Abgasanlage und/oder durch Abwärme von Elektromotoren, Elektronikkomponenten und dergleichen auf Temperaturen von 5° K bis 10° K über der Temperatur Tᵤ der Umgebungsluft erwärmt sein. Dieser Wärmeeintrag kann durch einen Umluftbetrieb und/oder starke Sonneneinstrahlung nochmals erhöht sein.

In diesem Fall kann die erwärmte Luft im Klimakasten auf Werte knapp oberhalb der Temperatur Tᵤ der Umgebungsluft abgekühlt werden, indem die Pumpeinrichtung 22 den weiteren Verdampfer 44 drosselfrei mit verflüssigtem Kältemittel beaufschlagt. Der Verdichter 24 ist hierbei nicht in Betrieb. Der Fahrgastraum des Kraftfahrzeugs kann also sehr effizient und kraftstoffsparend durch Betreiben der Pumpeinrichtung 22 gekühlt werden, wenn die Temperatur T_{U} der Umgebungsluft niedriger ist als die Temperatur T_{L} der Luft vor dem weiteren Verdampfer 44.

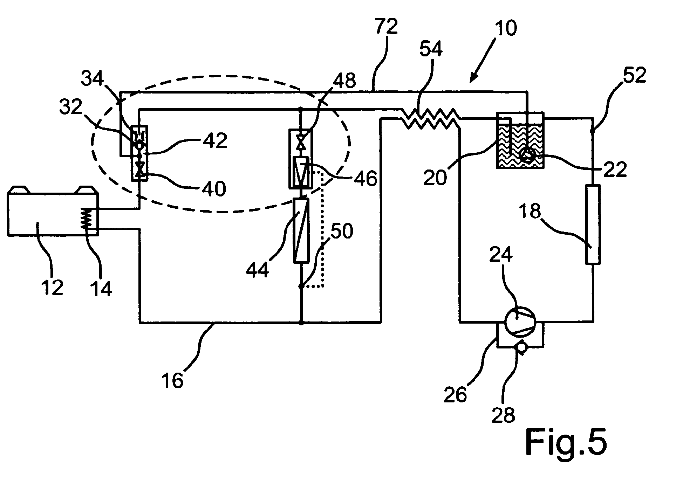

Fig. 5 zeigt ein weiteres Ausführungsbeispiel einer Kühlanordnung 10, welche im Wesentlichen der in Fig. 1 gezeigten Ausführungsform der Kühlanordnung 10 entspricht. Jedoch ist in der Kühlanordnung 10 gemäß Fig. 5 eine Überbrückungseinrichtung 72 zum Überbrücken des inneren Wärmetauschers 54 vorgesehen.

Die Überbrückungseinrichtung 72 überbrückt auch das etwa als Fixdrossel ausgebildete Expansionselement 34, welches dem Verdampfer 14 vorgeschaltet ist. Das gemäß Fig. 1 parallel zu der Pumpeinrichtung 22 in der Sammeleinrichtung 20 angeordnete Rückschlagventil 32 ist gemäß Fig. 5 stromabwärts des Expansionselements 34 und stromaufwärts einer Einmündung der Überbrückungseinrichtung 72 in das Beaufschlagungsmodul 42 angeordnet.

Die dem Expansionselement 34 zugeordnete Absperreinrichtung 40 ist stromabwärts der Einmündung der Überbrückungseinrichtung 72 in dem Beaufschlagungsmodul 42 angeordnet.

Durch Umgehen des inneren Wärmetauschers 54 mittels der Überbrückungseinrichtung 72 ist die niedrige Enthalpie h in dem verflüssigten Kältemittel besonders weitgehend nutzbar, um dem Elektroaggregat 12 beim Verdampfen in dem Verdampfer 14 Wärme zu entziehen.

Selbstverständlich können die dem weiteren Verdampfer 44 vorgeschalteten Komponenten, welche gemäß Fig. 5 das als thermostatisches Expansionsventil ausgebildete weitere Expansionselement 46 mit der vorgeschalteten Absperreinrichtung 48 umfassen, in das Beaufschlagungsmodul 42 integriert ausgebildet sein.

## Patentansprüche

1. Kühlanordnung zum Kühlen eines temperaturempfindlichen Aggregats, insbesondere eines Elektroaggregats (12), eines Kraftfahrzeugs, mit einem Kondensator (18) zum Verflüssigen zumindest eines Teilvolumens eines Kältemittels in einem Kältekreislauf (16) und mit einem stromabwärts des Kondensators (18) angeordneten Verdampfer (14), welcher mit dem Kältemittel beaufschlagbar ist und welchem Wärme des temperaturempfindlichen Aggregats, insbesondere des Elektroaggregats (12), zuführbar ist und mit einer Pumpeinrichtung (22), wobei der Kältekreislauf (16) stromabwärts des Verdampfers (14) und stromaufwärts des Kondensators (18) einen Verdichter (24) zum Verdichten des Kältemittels aufweist und dem Verdampfer (14) ein Expansionselement (34) zum Entspannen des verdichteten Kältemittels vorgeschaltet ist, wobei mittels der Pumpeinrichtung der Verdampfer (14) mindestens mit dem verflüssigten Teilvolumen des Kältemittels beaufschlagbar ist,
**dadurch gekennzeichnet, dass**
eine Überbrückungseinrichtung (26) zum Überbrücken des Verdichters (24) beim Beaufschlagen des Verdampfers (14) mittels der Pumpeinrichtung (22) vorgesehen ist.

2. Kühlanordnung nach Anspruch 1,
**dadurch gekennzeichnet, dass**
die, insbesondere als Tauchpumpe ausgebildete, Pumpeinrichtung (22) an einer, insbesondere stromabwärts des Kondensators (18) angeordneten, Sammeleinrichtung (20) zum Sammeln des verflüssigten Teilvolumens des Kältemittels angeordnet ist.

3. Kühlanordnung nach Anspruch 1 oder 2,
**dadurch gekennzeichnet, dass**
die Überbrückungseinrichtung (26) ein Rückschlagventil (28) aufweist, welches beim Beaufschlagen des Verdampfers (14) mittels der Pumpeinrichtung (22) von dem Kältemittel durchströmbar ist.

4. Kühlanordnung nach Anspruch 3,
**dadurch gekennzeichnet, dass**
mittels des Verdichters (24) das Kältemittel mit einem Druck beaufschlagbar ist, welcher größer ist als ein beim Durchströmen des Kältemittels durch die Pumpeinrichtung (22) maximal mittels der Pumpeinrichtung (22) aufbringbarer Staudruck.

5. Kühlanordnung nach einem der Ansprüche 3 oder 4,
**dadurch gekennzeichnet, dass**
eine, insbesondere ein Rückschlagventil (32) aufweisende, Überbrückungseinrichtung zum Überbrücken der Pumpeinrichtung (22) beim Beaufschlagen des Verdampfers (14) mittels des Verdichters (24) vorgesehen ist.

6. Kühlanordnung nach einem der Ansprüche 3 bis 5,
**dadurch gekennzeichnet, dass**
eine von dem Kältemittel durchströmbare Umgehungseinrichtung (38) zum Umgehen des Expansionselements (34) vorgesehen ist, welche mittels einer ersten Absperreinrichtung (36) absperrbar ist.

7. Kühlanordnung nach einem der Ansprüche 3 bis 6,
**dadurch gekennzeichnet, dass**
dem Expansionselement (34) eine zweite Absperreinrichtung (40) zugeordnet ist, mittels welcher ein Durchströmen des Expansionselements (34) zu unterbinden ist.

8. Kühlanordnung nach einem der Ansprüche 3 bis 7,
**dadurch gekennzeichnet, dass**
der Kältekreislauf (16) einen weiteren Verdampfer (44) zum Kühlen eines Fahrgastraums des Kraftfahrzeugs aufweist, welchem ein weiteres Expansionselement (46, 70) zum Entspannen des mittels des Verdichters (24) verdichteten Kältemittels vorgeschaltet ist.

9. Kühlanordnung nach Anspruch 8,
**dadurch gekennzeichnet, dass**
mittels der Pumpeinrichtung (22) in dem Kältekreislauf (16) eine maximale Differenz zwischen einem stromaufwärts und stromabwärts der Pumpeinrichtung (22) herrschenden Druck einstellbar ist, wobei das weitere Expansionselement (46) mittels dieser maximalen Differenz in eine Schließstellung überführbar ist.

10. Kühlanordnung nach Anspruch 8 oder 9,
**dadurch gekennzeichnet, dass**
dem weiteren Expansionselement (46) eine weitere Absperreinrichtung (48) zugeordnet ist, mittels welcher ein Durchströmen des weiteren Expansionselements (46) zu unterbinden ist.

11. Kühlanordnung nach einem der Ansprüche 8 bis 10,
**dadurch gekennzeichnet, dass**
das weitere Expansionselement (70) in eine Offenstellung überführbar ist, in welcher das weitere Expansionselement (70) zumindest im Wesentlichen ungehindert von dem Kältemittel durchströmbar ist.

12. Kühlanordnung nach den Ansprüchen 6, 7 und 11,
**dadurch gekennzeichnet, dass**
das Expansionselement (34) und die Absperreinrichtungen (36, 40) oder die Expansionselemente (34, 46, 70) und die Absperreinrichtungen (36, 40, 48) in ein Beaufschlagungsmodul (42) integriert ausgebildet sind.

13. Kühlanordnung nach einem der Ansprüche 3 bis 12,
**dadurch gekennzeichnet, dass**
dem Verdichter (24) ein innerer Wärmetauscher (54) vorgeschaltet ist, mittels welchem Wärme zwischen dem verdichteten Kältemittel und dem aus dem Verdampfer (14, 44) austretenden Kältemittel austauschbar ist.

14. Kühlanordnung nach Anspruch 13,
**dadurch gekennzeichnet, dass**
der Kältekreislauf (16) eine beim Beaufschlagen des Verdampfers (14, 44) mittels der Pumpeinrichtung (22) durchströmbare, insbesondere das Expansionselement (34) überbrückende, Überbrückungseinrichtung (72) zum Überbrücken des inneren Wärmetauschers (54) aufweist.

## Claims

1. Cooling arrangement for cooling a temperature-sensitive assembly, in particular an electric assembly (12), of a motor vehicle, comprising a condenser (18) for liquefying at least a part of the volume of a refrigerant in a refrigerant circuit (16), an evaporator (14) sited downstream of the condenser (18), to which the refrigerant can be applied and to which the heat of the temperature-sensitive assembly, in particular the electric assembly (12), can be supplied, and a pumping device (22), wherein the refrigerant circuit (16) is provided with a compressor (24) for compressing the refrigerant downstream of the evaporator (14) and upstream of the condenser (18) and wherein an expansion element (34) for expanding the compressed refrigerant is provided upstream of the evaporator (14), wherein at least the liquefied part of the refrigerant volume can be applied to the evaporator (14) by means of the pumping device,
**characterised in that**
a bridging device (26) is provided for bridging the compressor (24) while the evaporator (14) is pressurised by means of the pumping device (22).

2. Cooling arrangement according to claim 1,
**characterised in that**
the pumping device (22) which is in particular designed as a submersible pump, is located at a collecting device (20) for collecting the liquefied part of the refrigerant volume, which is in particular located downstream of the condenser.

3. Cooling arrangement according to claim 1 or 2,
**characterised in that**
the bridging device (26) comprises a check valve (28) through which the refrigerant can flow while the evaporator (14) is pressurised by means of the pumping device (22).

4. Cooling arrangement according to claim 3,
**characterised in that**
by means of the compressor (24) a pressure can be applied to the refrigerant which is higher than a maximum back pressure which can be generated by the pumping device (22) as the refrigerant flows through the pumping device (22).

5. Cooling arrangement according to claim 3 or 4,
**characterised in that**
a bridging device, in particular comprising a check valve (32), is provided for bridging the pumping device (22) while the evaporator (14) is pressurised by means of the compressor (24).

6. Cooling arrangement according to any of claims 3 to 5,
**characterised in that**
a bypass device (38) through which refrigerant can flow is provided for bypassing the expansion element (34), which bypass device can be closed by a first shut-off device (36).

7. Cooling arrangement according to any of claims 3 to 6,
**characterised in that**
a second shut-off device (40) by means of which any flow through the expansion element (34) can be prevented is assigned to the expansion element (34).

8. Cooling arrangement according to any of claims 3 to 7,
**characterised in that**
the refrigerant circuit (16) comprises a further evaporator (44) for cooling an occupant cell of the motor vehicle, upstream of which is provided a further expansion element (46, 70) for expanding the refrigerant compressed by means of the compressor (24).

9. Cooling arrangement according to claim 8,
**characterised in that**
by means of the pumping device (22) a maximum difference between a pressure prevailing upstream and downstream of the pumping device (22) can be set in the refrigerant circuit (16), wherein the expansion element (46) can be moved into a closed position by means of this maximum difference.

10. Cooling arrangement according to claim 8 or 9,
**characterised in that**
a further shut-off device (48) by means of which any flow through the further expansion element (46) can be prevented is assigned to the further expansion element (46).

11. Cooling arrangement according to any of claims 8 to 10,
**characterised in that**
the further expansion element (70) can be moved into an open position in which the refrigerant can flow through the further expansion element (70) in an at least substantially unimpeded manner.

12. Cooling arrangement according to claims 6, 7 and 11
**characterised in that**
the expansion element (34) and the shut-off devices (36, 40) or the expansion elements (34, 46, 70) and the shut-off devices (36, 40, 48) are integrated to form a pressurisation module (42).

13. Cooling arrangement according to any of claims 3 to 12,
**characterised in that**
an internal heat exchanger (54), by means of which heat can be exchanged between the compressed refrigerant and the refrigerant discharged from the evaporator (14, 44), is assigned to the compressor (24).

14. Cooling arrangement according to claim 13,
**characterised in that**
the refrigerant circuit (16) comprises a bridging device (72), through which refrigerant can flow while the evaporator (14, 44) by is pressurised by means of the pumping device (22) and which in particular bridges the expansion element (34), for bridging the internal heat exchanger (54).

## Revendications

1. Ensemble de refroidissement destiné à refroidir un groupe sensible à la température, en particulier un groupe électrique (12), d'un véhicule automobile, comprenant un condensateur (18) destiné à liquéfier au moins un volume partiel d'un fluide frigorigène dans un circuit de refroidissement (16) et un évaporateur (14) disposé en aval du condensateur (18) qui peut recevoir le fluide frigorigène et auquel peut être amenée de la chaleur du groupe sensible à la température, en particulier du groupe électrique (12) et un dispositif de pompage (22), le circuit de refroidissement (16) présentant en aval de l'évaporateur (14) et en amont du condensateur (18) un compresseur (24) pour comprimer le fluide frigorigène et un élément d'expansion (34) disposé en amont de l'évaporateur (14) étant destiné à détendre le fluide frigorigène comprimé, au moyen du groupe de pompage l'évaporateur (14) peut recevoir au moins le volume partiel liquéfié du fluide frigorigène, **caractérisé en ce qu'**il est prévu un dispositif de pontage (26) destiné à ponter le compresseur (24) lorsque l'évaporateur (14) est alimenté au moyen du dispositif de pompage (22).

2. Ensemble de refroidissement selon la revendication 1, **caractérisé en ce que** le dispositif de pompage (22), réalisé notamment comme une pompe submersible, est placé sur un dispositif collecteur (20), disposé en particulier en aval du condensateur (18), destiné à collecter le volume partiel liquéfié du fluide frigorigène.

3. Ensemble de refroidissement selon la revendication 1 ou 2, **caractérisé en ce que** le dispositif de pontage (26) présente un clapet anti-retour (28) qui peut être traversé par le fluide frigorigène au moyen du dispositif de pompage (22) lorsque l'évaporateur (14) est alimenté.

4. Ensemble de refroidissement selon la revendication 3, **caractérisé en ce qu'**au moyen du compresseur (24) le fluide frigorigène est soumis à une pression qui est supérieure à une pression dynamique pouvant être appliquée au maximum par le dispositif de pompage (22) lorsque le fluide frigorigène s'écoule au travers du dispositif de pompage (22).

5. Ensemble de refroidissement selon l'une quelconque des revendications 3 ou 4, **caractérisé en ce qu'**il est prévu un dispositif de pontage, présentant notamment un clapet antiretour (32), destiné au pontage du dispositif de pompage (22) lorsque l'évaporateur (14) est alimenté au moyen du compresseur (24).

6. Ensemble de refroidissement selon l'une quelconque des revendications 3 à 5, **caractérisé en ce qu'**il est prévu un dispositif de dérivation (38) servant à contourner l'élément d'expansion (34), ledit dispositif peut être traversé par le fluide frigorigène et fermé au moyen d'un dispositif de bouchage (36).

7. Ensemble de refroidissement selon l'une quelconque des revendications 3 à 6, **caractérisé en ce qu'**un second dispositif de bouchage (40) affecté à l'élément d'expansion (34) empêche le passage au travers de l'élément d'expansion (34).

8. Ensemble de refroidissement selon l'une quelconque des revendications 3 à 7, **caractérisé en ce que** le circuit de refroidissement (16) présente un autre évaporateur (44) destiné à refroidir l'habitacle du véhicule, ledit évaporateur est placé en amont d'un autre élément d'expansion (46, 70) destiné à détendre le fluide frigorigène comprimé au moyen du compresseur (24).

9. Ensemble de refroidissement selon la revendication 8, **caractérisé en ce qu'**au moyen du dispositif de pompage (22) dans le circuit de refroidissement (22) une différence maximale peut être réglée entre une pression régnant en aval et en amont du dispositif de pompage (22), l'autre élément d'expansion (46) pouvant être amené par cette différence maximale dans une position de fermeture.

10. Ensemble de refroidissement selon la revendication 8 ou 9, **caractérisé en ce que** l'autre élément d'expansion (46) est associé à un autre dispositif de bouchage (48) qui empêche le passage au travers de l'autre élément d'expansion (46).

11. Ensemble de refroidissement selon la revendication 6 à 10, **caractérisé en ce que** l'autre élément d'expansion (70) peut être amené dans une position d'ouverture dans laquelle l'autre élément d'expansion (70) peut être traversé du moins pratiquement sans empêchement par le fluide frigorigène.

12. Ensemble de refroidissement selon les revendications 6, 7 et 11, **caractérisé en ce que** l'élément d'expansion (34) et les dispositifs de bouchage (36, 40) ou les éléments d'expansion (34, 46, 40) et les dispositifs de bouchage (36, 40, 48) sont intégrés dans un module d'alimentation (42).

13. Ensemble de refroidissement selon l'une quelconque des revendications 3 à 12, **caractérisé en ce qu'**un échangeur thermique (54) interne est monté en amont du compresseur (24) au moyen duquel de la chaleur peut être échangée entre le fluide frigorigène comprimé et le fluide frigorigène sortant de l'évaporateur (14, 44).

14. Ensemble de refroidissement selon la revendication 13, **caractérisé en ce que** le circuit de refroidissement (16) présente un dispositif de pontage (72), destiné à ponter l'échangeur thermique (54) interne, qui ponte notamment l'élément d'expansion (34) et pouvant être traversé lorsque l'évaporateur (14, 44) est alimenté par le dispositif de pompage (72).
